# EUROPEAN PATENT APPLICATION

(11) **EP 1 492 067 A1**
(43) Date of publication of application: **29.12.2004**
(21) Application number: 04011662.6
(22) Date of filing: 17.05.2004
(51) Int. Cl.: G07F 19/00, G07F 7/08

(54) **Method for managing credit/debit stored on electronic media used for commercial operations**

(30) Priority: 23.06.2003 IT MI20031265
(71) Applicant: Vesiel S.p.A., 22069 Rovellasca (IT)
(72) Inventor: Denna, Maurizio, 22070 Lugaro Marinone (Prov. of Como) (IT); Ratti, Alessandro, 22100 Como (IT)
(74) Representative: Modiano, Guido, Dr.-Ing.

(57) **Abstract**

A method for managing credit/debit stored on electronic media particularly for vending machines, consisting of providing identification means that can be associated with the electronic media and are adapted to store the credit/debit value between one or more top-up operations and one or more sale operations.

## Description

The present invention relates to a method for managing credit/debit stored on electronic media used for commercial operations.

More particularly, the invention relates to a method for managing credit/debit stored on electronic media, such as cards and keys, used for purchases of low value, for example in vending machines.

As is known, the vending sector extensively uses electronic media on which users can store a monetary value to be used for subsequent purchases of goods by means of a vending machine or the like.

The electronic media that are used consist of cards or keys on which an amount available to the user for his purchases is stored. Appropriate devices are used to recognize coins and banknotes that the user inserts and whose equivalent monetary value is stored on said electronic media, constituting a "credit/debit" available to the user.

The credit/debit available on an electronic medium can be read and used in commercial operations, such as purchases of goods, whose value is lower than the value available on the electronic medium. These operations usually have a low individual value.

The advantages of the use of an electronic medium with respect to coins or banknotes for sales of low value are many.

First of all, the value of the item can be determined without constraints linked to the denomination of the smallest available circulating coin, accordingly allowing the precise application of discounts to the cost of the item, even on items having a low unit value. Moreover, the user does not need to have coins or banknotes available, and the vending machine does not have to return to the user any coins as change for the purchase.

Moreover, since no coins and banknotes are used in the machines, the possibility of theft or vandalism affecting such machines is limited.

The use of an electronic medium further encourages the user to make purchases, and the operator of the system receives the cash in advance with respect to its actual use by the user, with a substantial financial advantage.

However, these unquestionable advantages are contrasted by drawbacks linked to the management of the electronic credit/debit.

First of all, the electronic medium must be extremely secure, so that it cannot be copied, or so that it is not possible to transfer usable credit/debit onto said medium without this transfer corresponding to the monetary value actually received by the operator.

Furthermore, the value stored as electronic credit/debit cannot be checked directly, i.e., it is possible to calculate how much credit/debit has actually been loaded onto the electronic media or keys, but it is not equally possible to know how much is actually available, for example due to lost media or media that are valid but have been produced by unauthorized individuals.

The aim of the present invention is to provide a method for detecting the credit/debit stored on electronic media without having to withdraw such electronic media in order to obtain a total of the circulating credit/debit.

Within this aim, an object of the present invention is to provide a method for managing credit/debit stored on electronic media in which the operation for detecting the available credit/debit is performed absolutely automatically and without drawbacks for the user.

Another object of the present invention is to provide a method for managing credit/debit stored on electronic media that is highly reliable, relatively simple to provide, and at competitive costs.

This aim and these and other objects that will become better apparent hereinafter are achieved by a method for managing credit/debit stored on electronic media, particularly for vending machines, characterized in that it provides identification means that can be associated with said electronic media and are adapted to store the credit/debit value between one or more top-up operations and one or more sale operations.

Further characteristics and advantages of the invention will become better apparent from the following detailed description of preferred but not exclusive embodiments of the method according to the present invention, illustrated by way of non-limiting example in the accompanying drawings, wherein:
Figure 1 is a flowchart of a first embodiment of the method according to the present invention; and
Figure 2 is a flowchart of a second embodiment of the method according to the present invention.

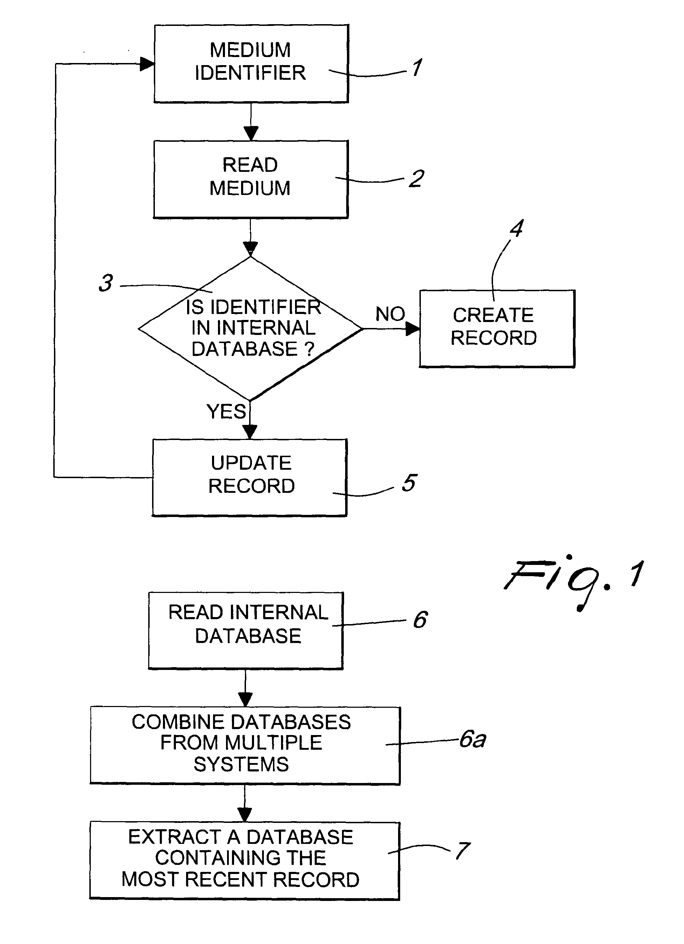

Initially with reference to Figure 1, the method according to the present invention, in its first embodiment, comprises a step 1 for identifying the individual media, for example by means of a unique serial number. In this way, each medium can be traced. When the medium is inserted in a payment and/or top-up system, the system reads the contents of the medium, step 2, including its identification number, and checks, step 3, in an internal database whether the unique serial number exists in the database. If said serial number does not exist, step 4, the system creates a record associated with the identification number read from the medium and said record stores at least the following data:
the value of the credit/debit and the identification number of the medium;
the date and time when the medium was read.

If the identification number exists, i.e., the record exists in the internal database of the payment/top-up system, the record is updated, step 5, with the value of the credit/debit available on the medium and the date and time when the medium was read.

Periodically, the internal database of the payment/top-up system is read, step 6. If the electronic media are used on multiple payment/top-up systems, all the systems are read (step 6a) and a global database is generated by appending the records of the databases read from the individual top-up/detection systems. A second database is extracted from the generated database, step 7, and contains the most recent record for each payment medium identifier. Analysis of the database extracted in step 7 allows to obtain the history of use of each medium, for example in order to trace media that have been topped up fraudulently, lost media, or media reported as damaged by users.

The extracted database therefore allows to exactly know the value of the credit/debit available to users.

The method described above therefore allows to obtain the total credit/debit present on the media available to users without having to withdraw said media, but simply by utilizing the occasions when the user uses his medium for a purchase from a vending machine.

The method described according to the first embodiment of the invention assumes that the payment/top-up systems have their own memory whose contents can be read periodically, said memory containing a database with the records related to the various electronic media.

The method described above also assumes that each medium is identified by a unique number.

If the memory available is not sufficient to store an extensive database and/or if the electronic media are not uniquely identified but it is possible to store an item of information on the electronic medium, it is possible to use a different method according to the second embodiment of the invention.

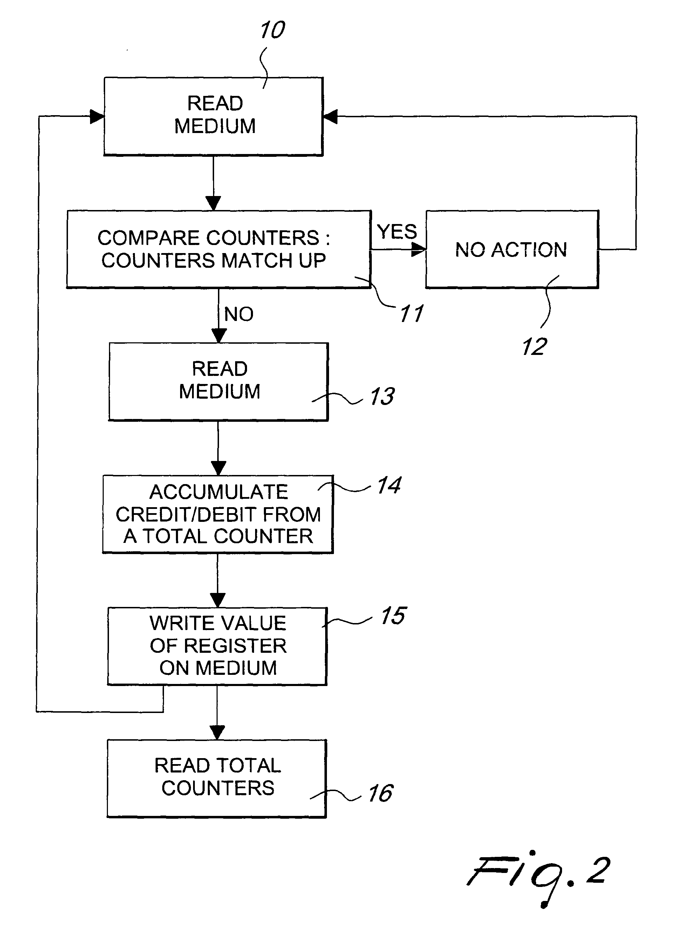

With reference therefore to Figure 2, the method according to its second embodiment comprises the following steps.

First of all, each payment/top-up system is provided with at least one internal electronic register, and all the systems in the same station have their register set to the same value. The electronic media store their own electronic register in the appropriate location.

When the electronic medium is introduced in a basic payment/top-up system 10, the electronic register present in the system is compared with the value present on the medium, step 11.

If the two electronic registers match, no action is taken, step 12.

Vice versa, if the electronic registers do not match, the credit/debit that is present on the electronic medium, step 13, is read and is added to a total counter, step 14, provided in the payment/top-up system, and at the same time the value of the electronic register that is present in the system is written on the electronic medium, step 15.

In this manner, the total counter of the payment/top-up system accumulates the value that is present on the electronic media that are presented by the system whose content has not already been accumulated by another system that is present in the station.

As in the first embodiment, the contents of all the total counters present in the station are read periodically (step 16), and their sum is simply calculated, representing the total of the credits available on electronic media that have been used. It is of course possible to also count the number of media to have an idea of how many have not been used since the previous reading of the totals. The total thus calculated is therefore a sort of snapshot of the credit/debit available to users, taken at the moment when the value of the electronic register in the payment/top-up systems was decided.

A new credit/debit snapshot can be initiated by changing the value of the electronic register and resetting the total counter that is present in the individual payment/top-up systems.

In practice it has been found that the method according to the invention fully achieves the intended aim and objects, since it allows to detect the credit/debit available on electronic media owned by users without having to return said media to the operator for their verification.

The method thus conceived is susceptible of numerous modifications and variations, all of which are within the scope of the appended claims;
All the details may further be replaced with other technically equivalent elements.

The disclosures in Italian Patent Application No. MI2003A001265 from which this application claims priority are incorporated herein by reference.

## Claims

1. A method for managing credit/debit stored on electronic media particularly for vending machines, **characterized in that** it provides identification means that can be associated with said electronic media and are adapted to store the credit/debit value between one or more top-up operations and one or more sale operations.

2. The method according to claim 1, **characterized in that** it comprises the steps of:
assigning said identification means to an electronic medium;
reading said medium and checking for the existence, within an internal database of a system for payment/top-up of said electronic media, of an identifier of said electronic medium that corresponds to said identification means assigned to said electronic medium;
if said identifier is not present, creating a record for said electronic medium; if it is present, updating said record; and
periodically reading said internal database and extracting from it a sub-database that contains the most recent record for each electronic medium, said record containing at least the value of the credit/debit available on said medium and an indication of the time when said medium was read.

3. The method according to claim 1, **characterized in that** said identification means comprise at least one electronic register that is internal to said electronic medium, a further electronic register being provided at said payment/top-up system, said electronic registers being compared when said medium is read; if said electronic registers are different, the credit/debit that is present on said medium is added to a total counter in the payment/top-up system and at the same time the value of the electronic register that is present in the payment/top-up system is written to the medium.

4. The method according to claim 3, **characterized in that** the number of media whose electronic register is different from the register stored in the payment system is counted.

5. The method according to claim 3, **characterized in that** said total counter accumulates the value that is present on the electronic media presented to said payment/top-up system, in order to provide an indication of the total of the credit/debit available on the electronic media.

6. The method according to claim 1, **characterized in that** the total counter of said payment/top-up system is reset every time one wishes to determine again the value of the credit/debit available on the electronic media read by said payment/top-up system.
